# EUROPEAN PATENT SPECIFICATION

(11) **EP 1 503 887 B1**
(45) Date of publication and mention of the grant of the patent: **09.07.2008**
(21) Application number: 03718968.5
(22) Date of filing: 06.05.2003
(51) Int. Cl.: B29C 39/00

(54) **MANUFACTURE OF BOTTLE WITH PUSH-ON CLOSURE**
HERSTELLUNG EINER FLASCHE MIT DRUCKVERSCHLUSS
FABRICATION D'UNE BOUTEILLE A FERMETURE PAR PRESSION

(30) Priority: 07.05.2002 GB 0210398
(43) Date of publication of application: 09.02.2005
(73) Proprietor: Britton, Charles Jonathan, Tewkesbury, Gloucestershire GL20 8DD (GB)
(72) Inventor: BRITTON, Charles, Jonathan, Tewkesbury, Gloucestershire GL20 8DD (GB)
(74) Representative: Johnson, Yvonne Catherine
(86) International application number: PCT/GB2003/001911
(87) International publication number: WO 2003/095170

(56) References cited:
- WO-A-97/19801
- US-A- 3 109 547
- US-A- 3 441 161
- US-A- 3 572 413

## Description

### BACKGROUND OF THE INVENTION

This invention relates to a method of manufacturing a bottle which can be closed by a push-on closure, to apparatus for manufacturing the bottle, to a bottle and to a closure for the bottle. The invention is particularly though not exclusively suitable for use with bottles made of PET or PEN thermoplastic materials.

Beer drinkers throughout the world are familiar with the so-called crown cap, which is a metal cap used with glass beer bottles to provide an effective seal and which is applied by a crimping action and removed by a simple tool which engages under the edge of the rim of the cap to bend the cap up and lever it off the bottle. Metal crown caps are very effective but require a glass bottle and can not be used with plastics bottles, particularly made of PET or PEN. There is a need for a simple push-fit closure arrangement as an alternative to the crown cap.

PET bottles with screw tops are known but these do not have the same desirable properties for use with fermented or carbonated gaseous drinks as do crown caps. An example of the manufacture of a PET bottle with a screw top is described in International Patent Application WO97/19806. In that manufacture an embryo container is formed by injection moulding. The embryo container comprises a closed-end tube which will form the body of the bottle with an outward radial flange at its mouth. Part of the upper surface of the flange is formed with a spiral, which will form a screw thread. The embryo container is transferred to a stretch/blow moulding machine where pressure is applied to its interior, forcing the radial flange downwardly and outwardly so that the upper surface of the flange becomes the inner cylindrical surface of the mouth of the bottle with the screw thread formed in it.

Other methods for forming PET bottles are described for instance in United States Patents 5,126,177 (Stenger) and 5,501,590 (Orimoto et al.).

WO 97/19801 describes a method for making a container in two stages from thermoplastics material. The first stage involves injection moulding a preform and the second stage involves blow moulding the preform to result in a container.

US 3,572,413 describes a plastic container with an opening at the top and bulging inwardly adjacent its top, and a snap-on skirted cover with annular tongue means. No method for the production of such a product is described.

None of the prior art however provides a means for making a bottle with a push-on closure which can be employed with a plastics bottle and/or closure without the need to use a crimped metal crown cap and yet which retains the advantages of the crown cap.

### SUMMARY OF THE INVENTION

The invention is defined in the independent claims below to which reference should now be made. Advantageous features are set forth in the appendant claims.

A preferred embodiment of the invention is described in detail below with reference to the drawings.

### BRIEF DESCRIPTION OF THE DRAWINGS

The invention will now be described in more detail, by way of example, with reference to the accompanying drawings, in which:
Fig.1 is a sectional view showing the injection moulding of a preform used in manufacturing a plastics bottle in an embodiment of the invention;
Fig.2 is a sectional view of the preform obtained from the injection moulding operation;
Fig.3 is a sectional view showing the shape of the rim of the preform in more detail;
Fig.4 shows the preform when transferred to a pressure or blow moulding machine;
**Fig.5** shows the preform as in Fig.4 with the blow core now in place;
**Fig.6** shows the preform with the stretching rod partially descended and with the blow core bearing against the inside of the rim of the preform;.
**Fig.7** is a detail sectioned view of the rim of the bottle and the part of the blow core which bears against it before pressure is applied to the rim;
**Fig.8** is a view similar to Fig.7 showing the rim partially distorted by the blow core;
**Fig.9** is a view similar to Fig.7 showing the rim with its final condition with the blow core fully descended;
**Fig.10** shows the stretch rod fully descended;
**Fig.11** shows the bottle in the blow moulding apparatus when the bottle has been blown under pressure;
**Fig.12** is a sectional view of the resultant bottle when removed from the mould;
**Fig.13** is a detail showing the shape of the rim of the finished bottle more clearly;
**Fig.14** is a top view of the bottle cap;
**Fig.15** is a side sectional view of the cap;
**Fig.16** is a sectional detail of part of the cap;
**Fig.17** is a detail view of part of the cap taken on the arrow A in Fig. 14;
**Fig.18** is a detail sectional view showing the cap on the bottle; and
**Fig.19** is a side view of the finished bottle with the cap on it.

### DETAILED DESCRIPTION OF THE PREFERRED EMBODIMENT

The method of making a preferred embodiment of the invention and a preferred apparatus for making it, together with the resultant bottle and a closure for the bottle will now be described in detail by way of example.

The bottle is made by an essentially two-stage process. Stage one involves injection moulding in an injection moulding machine a preform. This preform is then transferred to a pressure moulding machine where it is pressure moulded at an elevated temperature to form the final shape of the bottle. When placed into the pressure moulding apparatus the preform is deformed to form the rim of the bottle, and the body of the bottle is formed by blowing. Finally, the bottle is associated with a corresponding push-on closure which, after filling of the bottle, can be push-fitted to the rim of the bottle.

The bottle is made of a material which is susceptible to deformation when heated. This could be glass. However, the invention is particularly suitable for making bottles out of certain plastics materials, particularly thermoplastics. Materials such as polyethylene terephthalate (PET), polyethylene naphathalate (PEN), and co-polymers and blends of these two materials, in both crystalline and a amorphous form, could be viable.

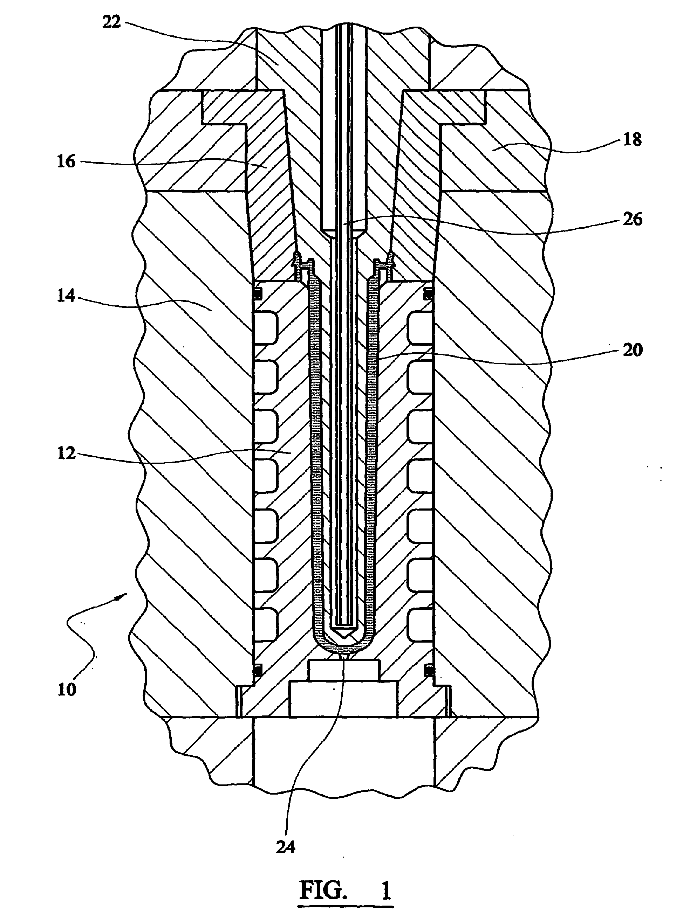

The first stage in the manufacture is illustrated in Fig.1. This figure shows a section through an injection moulding machine in which the preform has just been formed by injection moulding. The preform is shown at 20. The mould consists of a cavity insert 12, a cavity insert carrying block 14 surrounding and supporting the cavity insert 12, neck splits 16 supported by a neck split carrying plate 18 and an injection core 22. The preform 20 is formed in the cavity between the cavity insert 12 and the injection core 22, with the outer edge of the rim being defined by the neck splits.

The shape of the cavity is such that the preform is generally in the shape of a closed-end tube which tapers slightly towards its closed end, and has a rim at the open end of the tube and defining the opening or mouth of the bottle. The tubular part of the preform will eventually be expanded to form the body of the bottle. At this stage the outer surface and the inner surface of the preform both taper slightly towards the closed end of the tube, being defined by the inner mould surface of the cavity insert 12 and the outer mould surface of the injection core 22, respectively. The plastics is injected through an appropriate orifice 24 in the cavity insert 12, at the bottom end of the tube.

The rim section of the preform which is to form the mouth of the bottle and surrounds the opening to the tubular section of the preform is described in more detail below.

The injection moulding apparatus is provided with appropriate cooling channels around the cavity insert 12, and a cooling tube 26 extends into the interior of the injection core 22 so as to cool the mould core portion within the tubular part of the preform 20. In other respects the injection moulding machine is conventional.

When sufficiently solid the preform is then removed from the injection moulding apparatus. This is achieved by retracting the injection core 22, and slightly retracting the neck splits 16 on the neck split carrying plate 18. The preform can then be removed from the mould, if necessary with the application of some pressure from the bottom through the injection orifice 24.

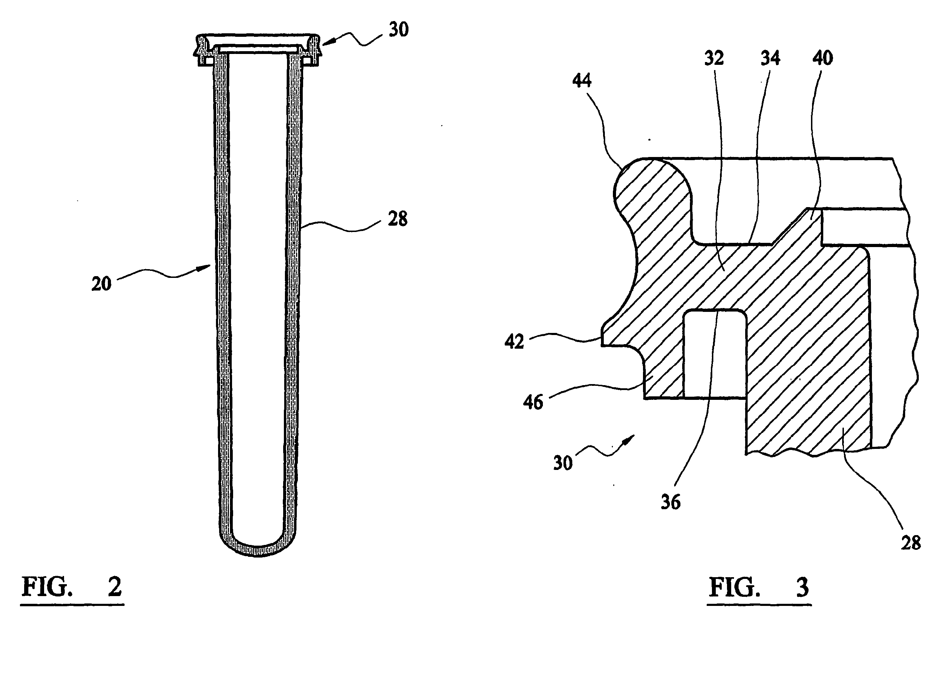

The resultant preform is shown in Figures. 2 and 3. Fig.2 shows the overall shape of the preform 20. The closed-end tube forms the greater part of the length of the preform, and terminates at the rim portion 30. The rim portion is more clearly shown in Figure 3, which is a detail sectional view through one part of the periphery of the rim 30. Here will be seen the upper part of the wall section of the tube 28 which is to form the eventual wall of the body of the bottle. On the top of the tubular wall portion 28 there is a transverse or annular flange 32 extending outwardly from the top end of the tube. It should be noted that in this description the preform and the eventual bottle are assumed to be in conventional orientation, that is with the mouth at the top and the base at the bottom. The terms "up" and "down" should therefore be construed in this sense although in fact the actual orientation of the preform or the bottle may be different from this.

The annular or outwardly-extending flange 32 has an upper surface 34 and a lower surface 36. The upper surface.34 is in part over the tubular wall portion 28, which thus depends from the inner edge of the flange. The upper surface 34 carries an upstanding first detent 40 at or towards its radially inner edge. The detent 40 on its inner periphery is generally perpendicular to the upper surface 34, and on its outer face slopes down towards the upper surface 34, as shown in Figure 3.

The outer end of the flange 32 terminates in three generally circumferential elements. The first of these is an outwardly-extending second detent 42. Above the outer end of the flange 32 is an upwardly-extending curved-ended sealing portion 44. This sealing portion 44 will cooperate with a push-on closure for the bottle to provide a liquid-proof seal adequate to contain the contents of the bottle when filled with beer or other carbonated beverage or similar contents. Finally, the periphery of flange 32 carries a downwardly-extending generally-cylindrical flange 46 which is essentially parallel to the upper-most portion of the wall of the tube, as shown in Figure 3.

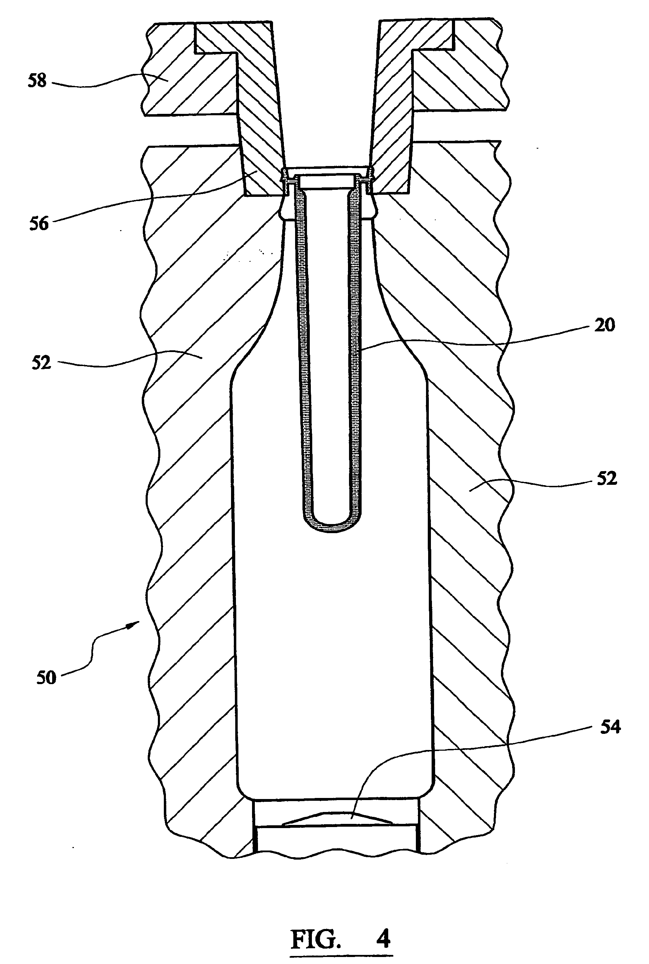

The preform is now transferred to a pressure moulding or blow moulding machine 50, a section through which is shown in Figure 4. The mould parts of the machine 50 define the final shape of the bottle. The exterior part of the body of the bottle is defined by three mould parts, namely two generally semi-cylindrical side mould parts 52 separable at an axial plane, and a base punt 54 forming the base of the bottle. The blow mould also includes neck splits 56 carried by a neck split carrying plate 58.

When the preform 20 is first inserted in the moulding machine 50, it is carried by the exterior portion of the rim 30, and in particular the second detent 42 on the exterior of the rim, engaging with correspondingly-shaped portions on the lower internal surface of the neck splits 56.

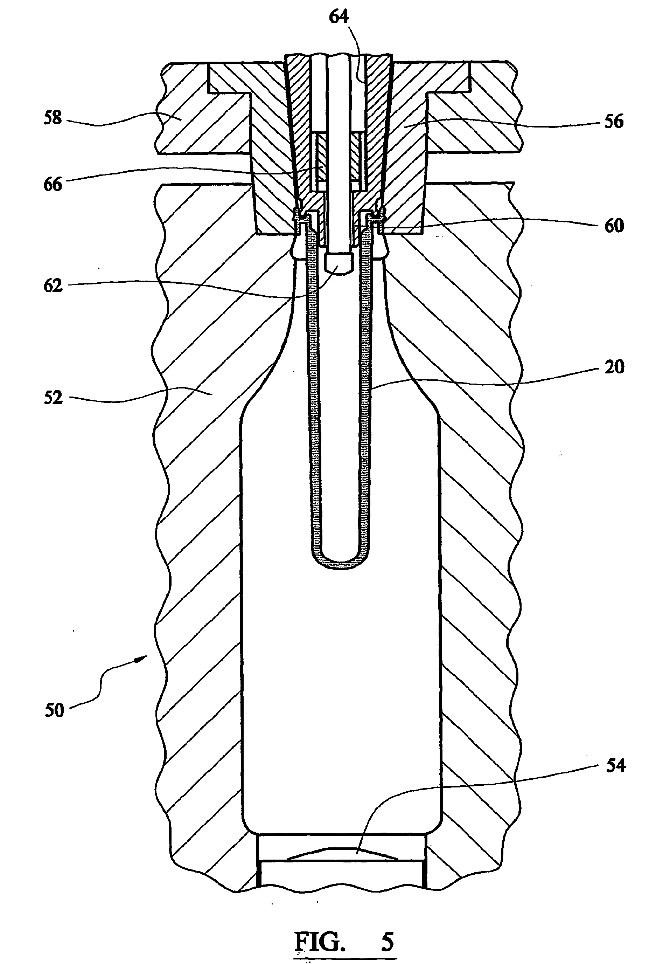

The operation of the moulding machine 50 in shaping the bottle will now be described with reference to Figures 5 to 11.

The operation that takes place in the moulding apparatus 50 is to move the outwardly-extending flange 32, and the first detent 40 with it, downwardly and outwardly, relative to the second detent 42. In effect, the first detent moves pivotally around the second detent, due to bending of the flange portion particularly at its outer region. The result of this movement is that the upper surface 34 of the flange 32 now faces inwardly rather than upwardly, and forms the inward part of the mouth of the bottle. The first detent 40 now projects inwardly into the bottle opening. In this position, as described below, a closure can be push-fitted onto the rim portion 30 of the bottle, to engage both the first now inwardly facing detent 40 and the second outwardly facing detent 42, so that it is retained on the bottle by these two detents. When the flange and the first detent have been moved to their final positions, the tubular wall portion 28 of the bottle is then expanded to fill the inside of the mould and form the body of the bottle. Although thus described as two distinct steps, the precise timing of the step of forming the final shape for the rim of the bottle and the expanding of the tube can be such that they overlap or are in part simultaneous, rather than purely sequential as is described.

In more detail therefore, Figure 5 shows the preform 20 in the moulding machine 50, with the blow core 60 of the moulding apparatus now inserted in the mouth of the mould cavity. The blow core is shaped to seal against the top of the mould when fully inserted and has a central throughway through which passes a stretch rod or pin 62 which can be extended to reach the bottom of the mould cavity, as described below. The longitudinal passage 64 through which the blow pin 62 passes is wide enough also to provide for the flow of air under pressure through the blow core past the blow pin and into the interior of the tubular wall portion 28 of the preform 20. An air inlet guide bush 66 is provided within the blow core 60. The blow core extends into the tubular wall portion 28 below the periphery of the rim portion 30 of the preform 20.

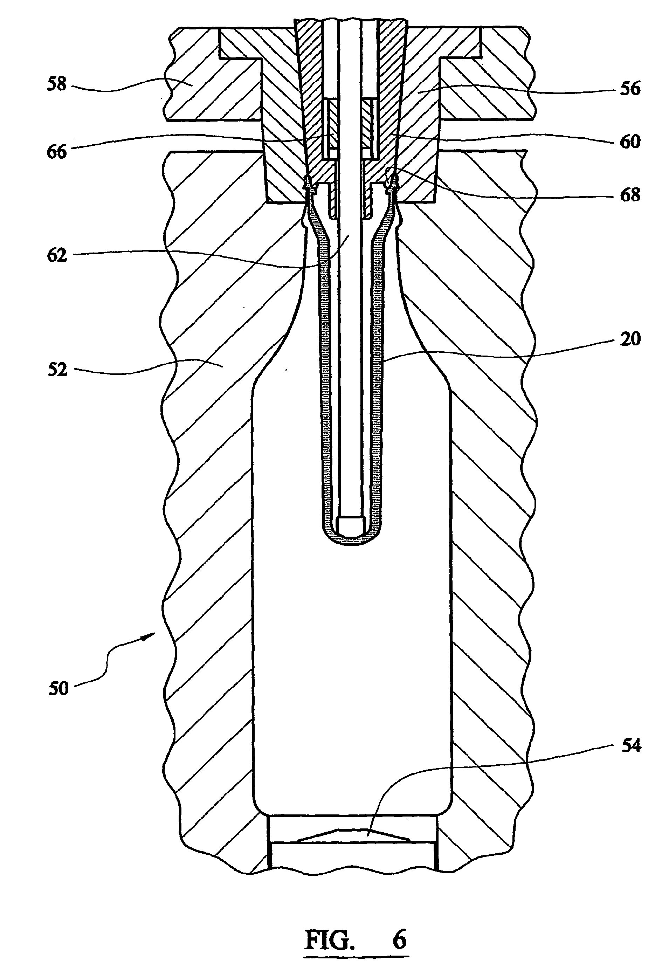

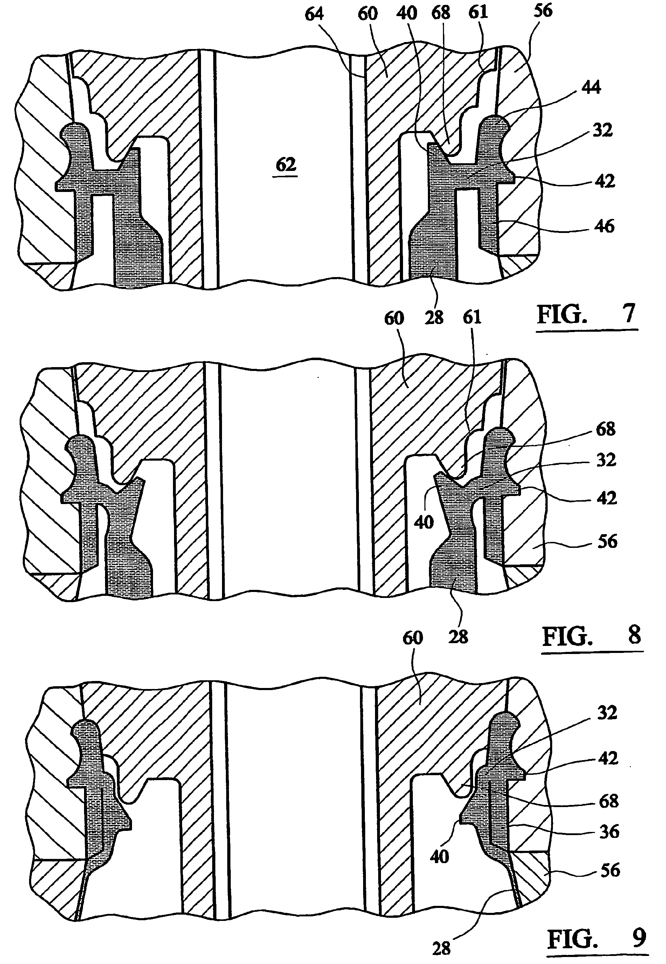

Figure 5 actually shows the blow core 60 before it is fully inserted. This figure shows the blow core 60 at the position where a downwardly-extending lip 68 engages with the upper surface of the transverse flange 32, in the region of the first detent 40. At this point the preform is at a sufficiently elevated temperature for the plastics material to be deformable. The blow core is now fully inserted into the mould to the position shown in Figure 6. It is in this operation that the blow core acts as a mandrel and the flange 32 and the first detent 40 are moved downwardly and outwardly, relative to the second detent 42, forcing the upper surface 34 of the flange now to face inwardly. The stages of operation are more clearly seen in Figures 7 to 9 which show the rim of the preform and the bottom of the blow core 60 on a greater scale.

Figure 7 corresponds to the position shown in Figure 5, just before the blow core is fully inserted. Here the lip 68 is just starting to make contact with the outer sloping surface of the detent 40 sufficient to start the bending operation. Figure 8 shows an intermediate position between the Figure 5 and Figure 6 positions where the transverse flange 32 and the detent 40 have been partially moved to their final positions. The pushing effect of the lip 68 on the blow core 60 engaging with the detent 40 has started to bend and turn down the flange so as to move the radially inner portion of the flange carrying the detent 40 relative to the outer portion of the flange carrying the detent 42. The detent 42 is being retained in position by its engagement with the neck splits 56.

The blow core is shown fully inserted in Figure 9. So far as the rim is concerned, the lip 68 has now pushed the detent 40 right around through 90° so that it no longer faces upwardly, but now faces inwardly into the mouth of the bottle. In this position, the lower surface 36 of the flange 32 has now been forced round to the point where it contacts the downwardly-extending cylindrical flange 46 at the outward end of what was previously the flange 32. Due to the fact that the plastic is at an elevated temperature, the underside of the flange 32 melts into and becomes homogeneous with the cylindrical flange 46, thereby providing strength and solidity to the structure.

It will be seen from Figs. 7 to 9 that the periphery of the bottom end portion of the blow core 60 is relieved as at 61 to allow for the shape of the rim portion when the blow core is fully inserted. In this condition the rim 30 is now clamped between the neck splits 56 and the blow core 60, with the second detent 42 still engaging the neck splits 56.

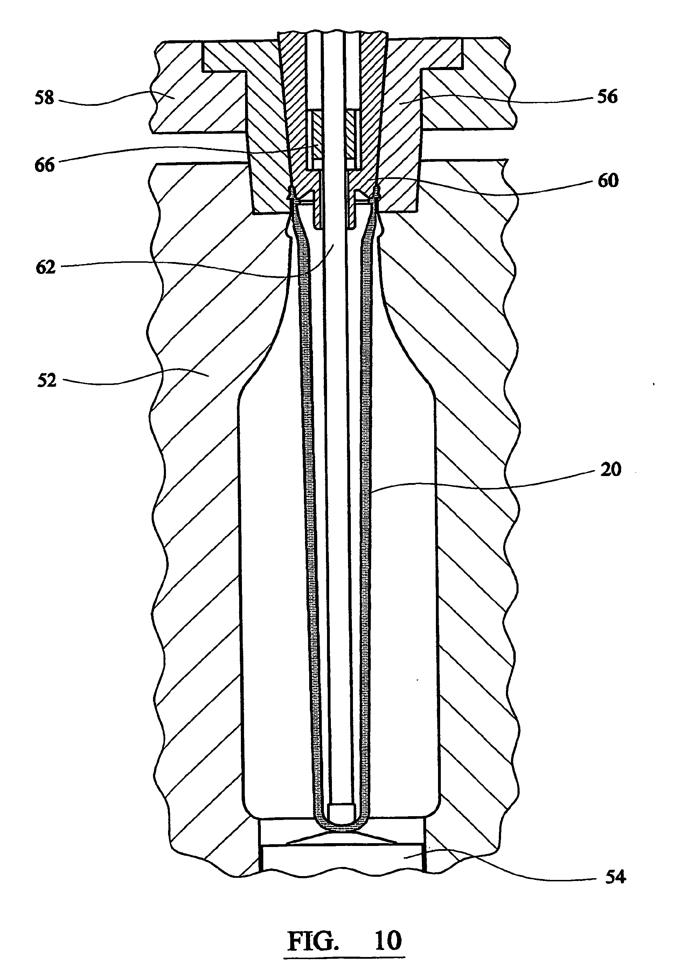

The next stage is for the blow pin to be extended and this is illustrated in Figure 10. The blow pin 62 is now fully inserted into the mould cavity, causing the tubular wall portion 28 to be stretched longitudinally down to the bottom end of the mould. This stretching operation is important in providing strength to the finished bottle when made of PET or PEN.

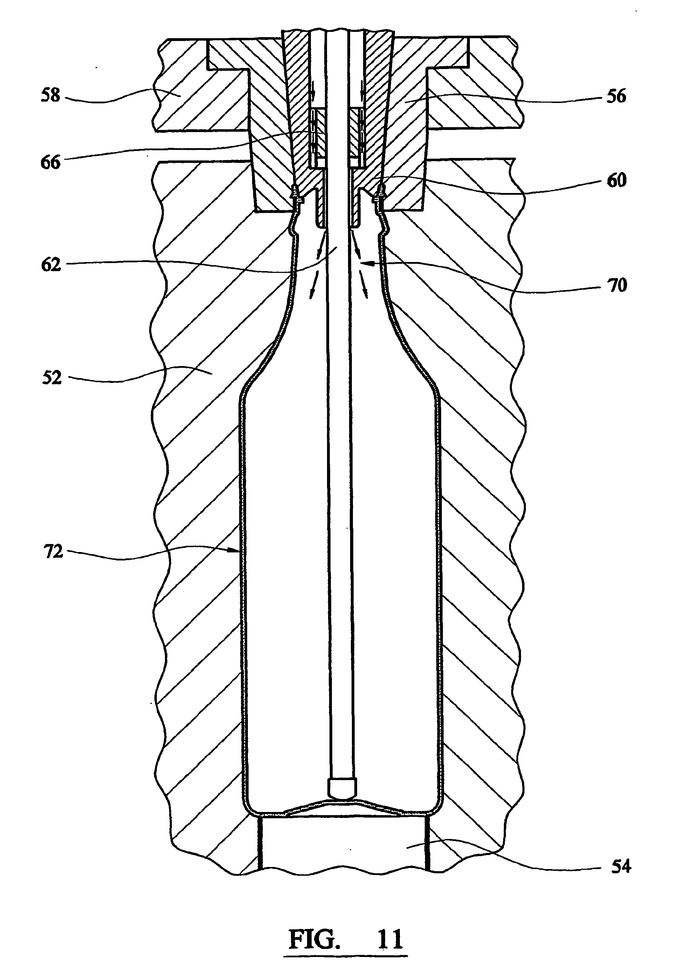

Finally, air under pressure is injected through the passageway 64 in the blow core 60 and around the blow pin 62 into the interior of the bottle. The effect of this is to expand the tubular wall portion 28 into the shape of the bottle as defined by the interior surfaces of the mould parts 52, forming the desired final shape of the bottle. The mould parts may carry desired shaping to provide a more complex shaping for the bottle in well known manner. The expansion of the tubular part will of course thinning of the bottle wall, as is seen in Figure 11. Adjacent to the rim portion 30, the wall now flares away from the rim, this in fact being the position shown in Figure 9. The path of the air into the bottle expanding the bottle is shown by arrows 70 on Figure 11. The final bottle shape is now referenced 72 on Figure 11. The body of the bottle has now been expanded so that the rim portion 30 is narrower than the body of the bottle.

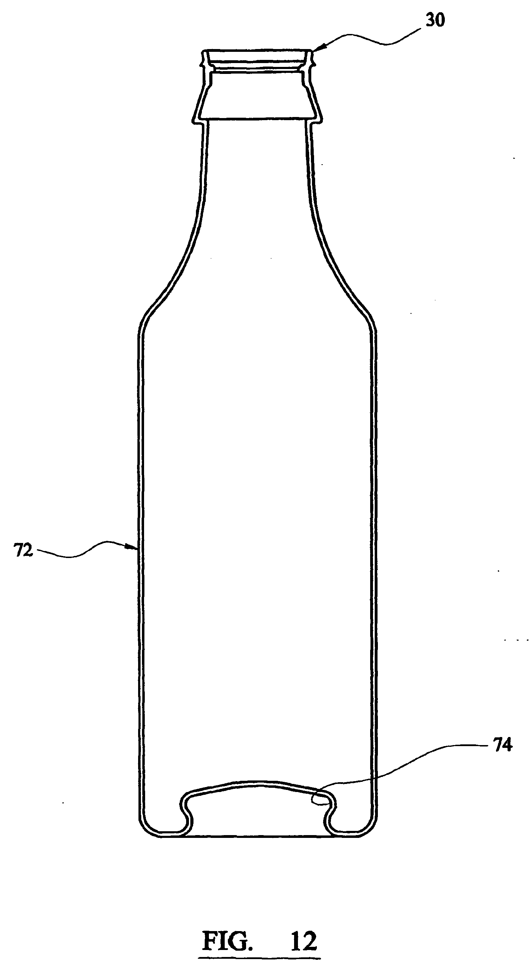

The bottle 72 is now removed from the mould and is shown in Figure 12. The base of the bottle as shown in Figure 12 represents a modification of the bottle previously described. In this modification the base has been formed using the process described in International Patent Application publication number W097/19802, to which reference should be made for further description thereof. Briefly, the base is provided with an undercut re-entrant shape which provides greater strength to the base portion of the bottle. This shape is formed by the use of a multipart mould having a plurality of segments surrounding a tapered core which is moveable to wedge the segments from a closely packed array to a mutually spread array. In this manner an undercut shape as shown at 74 can be provided.

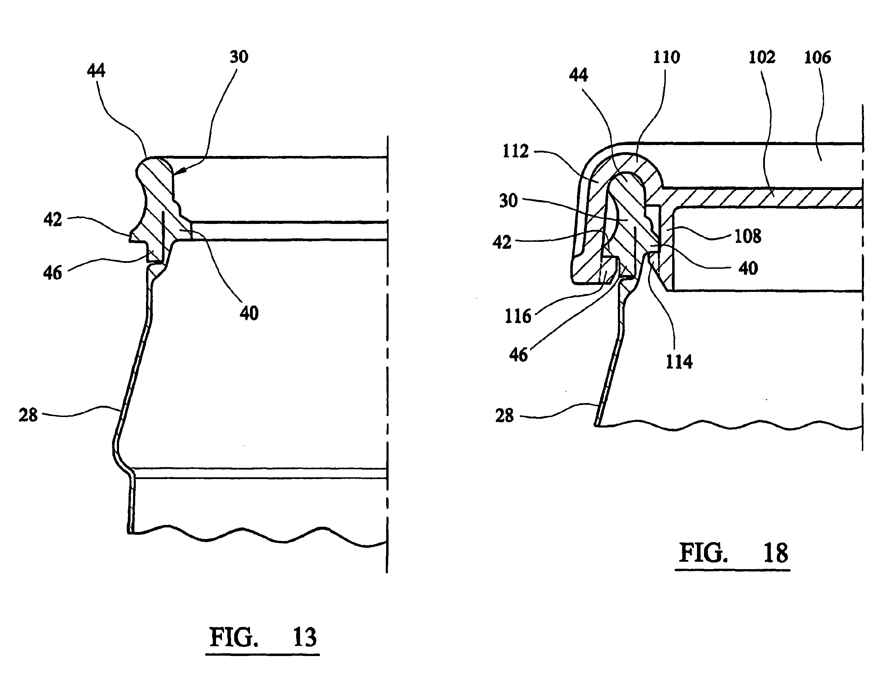

Figure 13 represents a detailed sectional view through the rim portion 30. As is seen, the first detent 40 now constitutes an inner detent, and the second detent 42, as before, constitutes an outer detent. A plastics push-on cap can now be provided which engages with these two detents to secure the cap on the rim of the bottle. The outer wall forming the body of the bottle now lies below the outer cylindrical flange 46, while the upper part of the rim portion forms a seal with the closure as described below.

It will be seen from the foregoing that the forming of the shape of the final bottle in the blow moulding machine is achieved by a combination of three measures, namely pushing the flange 32 and the top of the tubular wall portion 28 with the bottom surface of the blow core 60, pulling the tubular wall portion 28 downwardly by extension of the blow pin 62, and the application of air pressure through the passage 64 in the blow core. The manner in which these three measures are best applied can be determined empirically for any particular situation. It may be desirable to provide the pushing with the blow core first followed by stretching with the blow pin and then the application of pressure. However, it may be preferable for these steps to partially overlap or to take place simultaneously depending on the particular application.

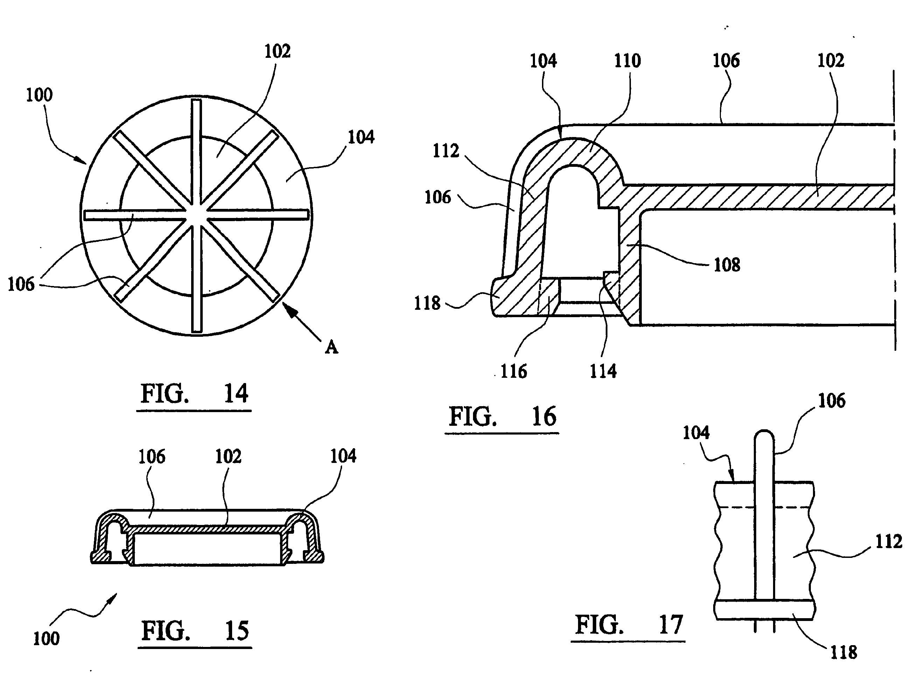

The closure for the bottle will now be described with reference to Figures 14 to 18 of the drawings. The closure, cap or top 100 illustrated has a planar disc-shaped central portion 102 and a peripheral bottle-engaging portion 104. Across the top of the disc and the bottling engaging portion 104 are eight diametrically-extending ribs 106 equally spaced around the disc as seen from above in Figure 14.

As shown in Figure 15 and more clearly in Figure 16, the peripheral bottle engaging portion 104 is generally in the shape of a trough or inverted U, with opposed inwardly-directed engaging tangs at the mouth of the U. More particularly, the inner arm of the U is formed by a cylindrical flange 108 depending from the outer edge of the disc 102 where it merges into the U shaped portion or arm 104. The curved portion 110 of the U then merges into an outer cylindrical portion of arm 112 forming the outer circumferential part of the bottle-engaging portion 104. The lower end of the flange 108 carries an outwardly-directed first tang or finger 114, and the lower end of the outer arm 112 carries a second inwardly-directed tang or finger 116. Whereas the detents 40 and 42 on the bottle are preferably continuous around the periphery of the bottle, the tangs 114 and 116 may be and preferably are discontinuous and each consist of a plurality of discreet tangs arranged around the circumferential extent of the closure. The tangs are of slightly lesser extent than the spaces between them. This facilitates the construction of the mould for moulding the closure which can then release the closure by a turn-then-push movement in the manner of a bayonet catch.

The bottom faces of the first and second tangs 114 and 116 are champhered to allow them to separate as they pass over the rim portion 30 of the bottle.

It should be noted that the ribs 106 extend over the U shaped peripheral bottle engaging portion 104 down to a circumferential ridge 118 which runs around the bottom of the outer arm 112. That is to say the remote ends of the rib 106 provides stiffening for the outer arm 112 of the U section 104. The extent to which this is required will need to be determined empirically. Figure 17 shows an end view of one of the ribs 106 as taken on the arrow A in Figure 14.

When the bottle has been filled with its desired contents, the cap 100 can be forced on the rim of the bottle to the position shown in Figure 18 in sectional view. When the closure is pressed onto the rim portion 30 of the bottle, the arms 108 and 112 distort to allow the closure to move onto the rim of the bottle. More particularly, the two arms of the U open up into a somewhat V shape so as to pass over the portions forming the rim of the bottle. First of all, the second tangs 116 engage with the side of the sealing portion 44 forming the top of the rim of the bottle so as to pass over the sealing portion 44. The champhering of the bottom of the tangs 116 assist in this. Then the tangs 116 engage with the detent 42 while simultaneously the tangs 114 engage with the detent 40. All four elements are angled at their points of contact, so that further pressure from above causes the inner flange 108 to move inwardly and the outer wall 112 to move outwardly, allowing the tang 114 to pass over the detent 40 and the tang 116 to pass over the detent 42 due to radial flexing. When sufficiently on the bottle, the tang 114 and the flange 108 move outwardly again to lock on the underside of the detent 40, while correspondingly the tang 116 and the outer wall 112 move inwardly to lock and securely engage on the underside of the detent 42. The flange 108 now extends into the interior of the bottle. In this position, the sealing portion 44 co-operates closely with the interior of the curved portion 110 of the U shaped bottle-engaging portion 104 so as to provide an effective seal against escape of liquid or the carbonating gasses within the bottle. The cap can be made of the same type of plastics material as can be used for the bottle, including in particular PET.

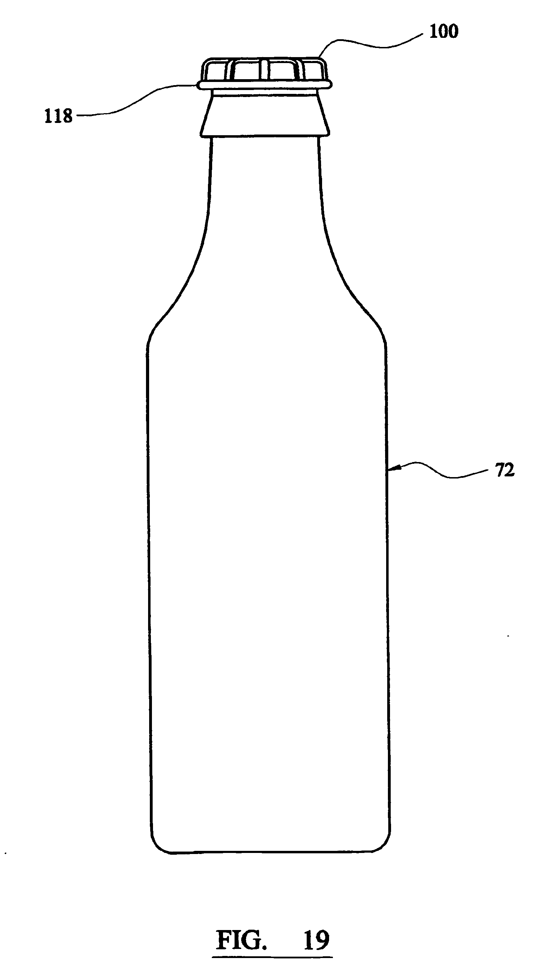

Finally, Figure 19 shows a side view of the completed bottle with the closure attached. The closure 100 is securely held on the bottle 72. However the closure 100 can be removed by application of upward pressure on the ridge 118 forming the outer lower periphery of the closure. A tool similar to that conventionally used to remove a metallic crown top from a beer bottle may be used to remove the closure 100 from the PET bottle 72. The closure 100 will not however bend in the manner of a metallic crown top but rather will come off essentially undistorted due to inward flexure of the flange 108 and corresponding outward flexure of the outer arm 112 of the U shaped element 104, forcing the tang 114 past the detent 40 and likewise forcing the tang 116 past the detent 42.

Finally, the retaining force holding the closure on the bottle is such that in the event of excess pressure arising in the bottle, for example exceeding 90 psi, the closure will be released from the bottle automatically by the pressure acting on the disc 102.

The bottle shape obtained is elongate with a longitudinal axis and is generally circularly symmetrical. However, other or irregular shapes can be obtained by appropriately shaping the interior of the mould.

A preferred embodiment of the invention has been described by way of example. However, many modifications may be made to the method, apparatus, bottle and bottle top described, and the foregoing description should be regarded only as one example of the implementation of the invention.

## Claims

1. A method of making a bottle (72) having a body and a rim (30) defining an opening for the bottle, the opening being capable of being closed by a push-on closure (100), the bottle being made of a material which is susceptible to deformation when heated, the method comprising the steps of:
injection moulding in an injection moulding apparatus a preform (20) in the shape of a closed-end tube (28) with a rim (30) at its mouth, the rim comprising an outward generally-radial flange (32) having an upper surface (34) and a lower surface (34), a first detent (40) simultaneously formed with the flange as an upstanding projection from the upper surface of the flange towards the radially inner end thereof, and a second radically-outward detent (42) formed at the outer edge of the flange, the tube depending from the radially-inner edge of the flange;
placing the preform in a pressure moulding apparatus (50) at an elevated temperature with the preform being located at least in part by means of the second detent;
moving the flange and the first detent downwardly and outwardly relative to the second detent so that the upper surface of the flange now faces inwardly and the first datent projects inwardly into the opening for the bottle, whereby a closure can be push-fitted onto the rim of the bottle to engage both the first inwardly-facing detent and the second outwardly-facing detent; and
expanding the tube under pressure to form the body of the bottle.

2. A method according to claim 1, in which the moving step is caused at least in part by means of a portion of a core of the pressure moulding apparatus bearing against the upper surface of the flange and/or the first detent.

3. A method according to claim 1 or 2, in which the moving step is caused at least in part by differential pressure applied between the interior of the preform and the exterior.

4. A method according to claim 1, 2 or 3, in which the moving step is caused at least in part by downward stretching applied to the tube portion of the preform.

5. A method according to claim 1, further comprising the step of longitudinally stretching the tube portion of the preform.

6. A method according to claim 1 or 5, further comprising the step of applying differential pressure between the interior of the preform and the exterior to expand the tube portion to form the body of the bottle.

7. A method according to claim 1, in which the preform is formed with an upwardly-extending sealing portion (44) extending above the second detent in the rim portion.

8. A method according to claim 1, in which the rim includes a downward flange (46) depending from the outer and of the radial flange.

9. A method according to claim 8, in which in the moving step the lower surface of the radial flange moves into homogeneous contact with the downward flange.

10. A method according to claim 1, in which the first detent extends continuously around the mouth of the preform.

11. A method according to claim 1, in which the second detant extends continuously around the mouth of the preform.

12. A method according to claim 1, in which the material is selected from the groups comprising polyethylene terephthalate, polyethylene naphthalate and co-polymers and blends thereof.

13. A method according to claim 1, further comprising the steps of filling the bottle with liquid, and push-fitting a closure (100) to the bottle, in which the closure includes first and second engaging portions (114, 116) for engaging respectively with the first and second detents to secure the closure on the bottle.

14. A method according to claim 13, in which the first and/or the second engaging portions are discontinuous around the closure.

15. Apparatus for making a bottle having a body and a rim portion defining an opening for the bottle, the opening being capable of being closed by a push-on closure, the apparatus comprising:
injection moulding apparatus (12, 14, 16, 18, 22) shaped and arranged to produce a preform in the shape of a closed-end tube with a rim at its mouth, the rim comprising an outward generally-radial flange having an upper surface and a lower surface, a first detent upstanding from the upper surface of the flange towards the radially inner end thereof, and a second radially-outward detent at the outer edge of the flange with the tube depending from the radially-inner edge of the flange; and pressure moulding apparatus (50) having mould parts defining a mould cavity and comprising means (56) to locate the preform in the mould cavity with the second detent in a fixed location therein, and means (64) for applying a pressure differential between the interior of the tube and the extension to expand the tube into contact with the mould parts defining the mould cavity,
**characterized in that**
the apparatus comprises means (60) for moving the flange and the first detent downwardly and outwardly relative to the second detent such that the upper surface of the flange faces inwardly and the first detent projects inwardly into the opening for the bottle.

16. A bottle (72) obtainable by the method of claim 1 made of a material which is susceptible to deformation when heated, the bottle comprising a body portion and a rim portion (30), the rim portion being narrower than the body portion and providing an opening constituting the mouth of the bottle, the rim portion including an inwardly-facing detent (40) facing into the opening and an outwardly-facing detent (42) facing radially outwardly, a portion between the detents being adapted to constitute a sealing portion (44).

17. A bottle according to claim 16, wherein the bottle is provided with a sealing closure (100), the closure having a peripheral trough defined between inner cylindrical flange (108) and an outer arm (112), the inner cylindrical flange (108) carrying engagement means (114) for engaging the inwardly-facing detent on the bottle and the arm (112) carrying engagement means (116) for engaging the outwardly-facing detent on the bottle, and a portion (110) in the trough for sealing engagement with the sealing portion (44) of the rim portion (30) of the bottle.

## Patentansprüche

1. Verfahren zum Herstellen einer Flasche (72), welche einen Körper und einen eine Öffnung für die Flasche festlegenden Rand (30) aufweist, wobei die Öffnung mittels eines Aufsteckdeckels (100) verschließbar ist, wobei die Flasche aus einem Material hergestellt wird, welches deformierbar ist, wenn es erwärmt wird, wobei das Verfahren die folgenden Schritte aufweist:
Spritzgießen einer Vorform (20) in der Form eines ein geschlossenes Ende aufweisenden Rohrs (28) mit einem Rand (30) an seiner Mündung in einer Spritzgießvorrichtung, wobei der Rand einen sich im wesentlichen radial nach außen erstreckenden Flansch (32), der eine obere Fläche (34) und eine untere Fläche (36) aufweist, eine erste Raste (40), welche gleichzeitig mit dem Flansch als ein aufrechter Vorsprung von der oberen Fläche des Flanschs in Richtung des radialen inneren Endes desselben gebildet wird, und eine zweite, radial nach außen gerichtete Raste (42) aufweist, welche an dem äußeren Rand des Flanschs gebildet wird, wobei das Rohr an dem radialen inneren Rand des Flansches hängt;
Anordnen der Vorform in einer Druckgießvorrichtung (50) mit einer erhöhten Temperatur, wobei die Vorform zumindest teilweise mittels der zweiten Raste angeordnet wird;
Bewegen des Flanschs und der ersten Raste nach unten und außen relativ zu der zweiten Raste, so dass die obere Fläche des Flanschs nun nach innen zeigt und die erste Raste nach innen in die Öffnung für die Flasche hervorsteht, wobei ein Deckel auf den Rand der Flasche aufgesteckt werden kann, um sowohl mit der ersten, nach innen gerichteten Raste als auch mit der zweiten, nach außen gerichteten Raste in Eingriff zu gehen; und
Erweitern des Rohrs unter Druck, um den Körper der Flasche zu bilden.

2. Verfahren nach Anspruch 1,
bei welchem der Schritt des Bewegens zumindest teilweise mittels eines Abschnitts eines Kerns der Druckgießvorrichtung bewirkt wird, welche gegen die obere Fläche des Flanschs und/oder die erste Raste drückt.

3. Verfahren nach Anspruch 1 oder 2,
in welchem der Schritt des Bewegens zumindest teilweise durch einen Differenzdruck bewirkt wird, welcher zwischen dem Inneren der Vorform und dem Äußeren aufgebracht wird.

4. Verfahren nach Anspruch 1, 2 oder 3,
in welchem der Schritt des Bewegens zumindest teilweise durch auf den Rohrabschnitt der Vorform aufgebrachtes Strecken nach unten bewirkt wird.

5. Verfahren nach Anspruch 1,
welches des weiteren den Schritt des Längsstreckens des Rohrabschnitts der Vorform aufweist.

6. Verfahren nach Anspruch 1 oder 5,
welches des weiteren den Schritt des Aufbringens eines Differenzdrucks zwischen dem Inneren der Vorform und dem Äußeren aufweist, um den Rohrabschnitt zu erweitern, um den Körper der Flasche zu bilden.

7. Verfahren nach Anspruch 1,
in welchem die Vorform mit einem sich nach oben erstreckenden Dichtabschnitt (44) gebildet wird, welcher sich über die zweite Raste in dem Randabschnitt erstreckt.

8. Verfahren nach Anspruch 1,
in welchem der Rand einen nach unten gerichteten Flansch (46) aufweist, welcher von dem unteren Ende des radialen Flanschs ausgeht.

9. Verfahren nach Anspruch 8,
in welchem in dem Schritt des Bewegens die untere Fläche des radialen Flanschs sich in homogenen Kontakt mit dem nach unten gerichteten Flansch bewegt.

10. Verfahren nach Anspruch 1,
in welchem die erste Raste sich kontinuierlich um die Mündung der Vorform erstreckt.

11. Verfahren nach Anspruch 1,
in welchem sich die zweite Raste kontinuierlich um die Mündung der Vorform erstreckt.

12. Verfahren nach Anspruch 1,
in welchem das Material aus der Gruppe ausgewählt wird, welche Polyethylentherephtalat, Polyethylennaphthalat und Co-Polymere und Mischungen davon umfasst.

13. Verfahren nach Anspruch 1,
welches des weiteren die Schritte des Füllens der Flasche mit einer Flüssigkeit und des Aufsteckens eines Deckels (100) auf die Flasche aufweist, wobei der Deckel erste und zweite Eingriffsabschnitte (114,116) zum in Eingriff gehen mit der ersten bzw. der zweiten Raste aufweist, um den Deckel auf der Flasche zu fixieren.

14. Verfahren nach Anspruch 13,
in welchem die ersten und/oder die zweiten Eingriffsabschnitte um den Deckel diskontinuierlich sind.

15. Vorrichtung zum Herstellen einer Flasche, welche einen Körper- und einen eine Öffnung für die Flasche festlegenden Randabschnitt aufweist, wobei die Öffnung mittels eines Aufsteckdeckels verschließbar ist, wobei die Vorrichtung folgendes aufweist:
Eine Spritzgießvorrichtung (12,14,16,18,22), welche so geformt und dafür vorgesehen ist, eine Vorform in der Form eines ein geschlossenes Ende aufweisenden Rohrs mit einem Rand an seiner Mündung zu produzieren, wobei der Rand einen sich nach außen im wesentlichen radial erstreckenden Flansch mit einer oberen Fläche und einer unteren Fläche, eine erste Raste, welche von der oberen Fläche des Flansches in Richtung des radialen anderen inneren Endes des selben hervorsteht und eine zweite, sich radial nach außen erstreckende Raste an dem äußeren Rand des Flansches aufweist, wobei das Rohr von dem radialen inneren Rand des Flansches ausgeht; und eine Druckgießvorrichtung (50), welche Formteile aufweist, die einen Formhohlraum bilden, und die eine Einrichtung (56) aufweisen, um die Vorform in dem Formhohlraum anzuordnen, wobei sich die zweite Raste in einer festen Position darin befindet, und eine Einrichtung (64) zum Aufbringen einer Druckdifferenz zwischen dem Inneren des Rohrs und dem Äußeren aufweist, um das Rohr in Kontakt mit den Formteilen zu erweitern, welche den Formhohlraum bilden,
**dadurch gekennzeichnet, dass** die Vorrichtung eine Einrichtung (60) zum Bewegen des Flansches und der ersten Raste nach unten und außen relativ zu der zweiten Raste aufweist, so dass die obere Fläche des Flansches nach innen gerichtet ist und die erste Raste nach innen in die Öffnung für die Flasche hervorsteht.

16. Flasche (72), welche durch das Verfahren von Anspruch 1 herstellbar ist, welche aus einem Material hergestellt ist, welches deformierbar ist, wenn es erwärmt wird, wobei die Flasche einen Körperabschnitt und einen Randabschnitt (30) aufweist, wobei der Randabschnitt enger als der Körperabschnitt ist und eine Öffnung aufweist, welche die Mündung der Flasche bildet, wobei der Rand eine nach innen gerichtete Raste (40), welche in die Öffnung gerichtet ist, und eine nach außen gerichtete Raste (42) aufweist, welche radial nach außen gerichtet ist, wobei ein Abschnitt zwischen den Rasten dafür vorgesehen ist, einen Dichtabschnitt (44) zu bilden.

17. Flasche nach Anspruch 16, wobei die Flasche mit einem Abdichtdeckel (100) versehen ist, wobei der Deckel eine Umfangsmulde, welche zwischen einem inneren, zylindrischen Flansch (108) und einem Arm (112) festgelegt ist, wobei der innere, zylindrische Flansch (108) eine Eingriffseinrichtung (114) zum in Eingriff nehmen der nach innen gerichteten Raste auf der Flasche trägt, und wobei der Arm (112) eine Eingriffseinrichtung (116) zum in Eingriff nehmen der nach außen gerichteten Raste auf der Flasche aufweist, und einen Abschnitt (110) in der Mulde für ein dichtendes in Eingriff gehen mit dem Dichtabschnitt (44) des Randabschnitts (30) der Flasche aufweist.

## Revendications

1. Procédé pour faire une bouteille (72) comportant un corps et un bord (30) définissant une ouverture pour la bouteille, l'ouverture étant capable d'être fermée par une fermeture par pression (100), la bouteille étant constituée d'un matériau qui est susceptible d'être déformé quand il est chauffé, le procédé comprenant les étapes consistant à :
mouler par injection dans un appareil de moulage par injection une préforme (20) en forme d'un tube à extrémité fermée (28) avec un bord (30) à son embouchure, le bord comprenant un rebord en général radial vers l'extérieur (32) comportant une surface supérieure (34) et une surface inférieure (36), une première détente (40) formée de manière simultanée avec le rebord sous forme de partie saillante se dressant à partir de la surface supérieure du rebord en direction de l'extrémité radialement interne de celle-ci, et une deuxième détente radialement vers l'extérieur (42), formée à la périphérie externe du rebord, le tube dépendant de la périphérie radialement interne du rebord ;
placer la préforme dans un appareil de moulage par pression (50) à une température élevée avec la préforme qui est située au moins en partie au moyen de la deuxième détente ;
déplacer le rebord et la première détente vers le bas et vers l'extérieur par rapport à la deuxième détente de sorte que la surface supérieure du rebord soit tournée maintenant vers l'intérieur et que la première détente fasse saillie vers l'intérieur dans l'ouverture de la bouteille, moyennant quoi une fermeture peut être faite par pression sur le bord de la bouteille pour enclencher à la fois la première détente tournée vers l'intérieur et la deuxième détente tournée vers l'extérieur ; et
faire l'expression du tube sous pression pour former le corps de la bouteille.

2. Procédé selon la revendication 1, dans lequel l'étape de déplacement est provoquée au moins en partie par le biais d'une partie d'un centre de l'appareil de moulage par pression s'appuyant contre la surface supérieure du rebord et de la première détente.

3. Procédé selon la revendication 1 ou 2, dans lequel l'étape de déplacement est provoquée au moins en partie par une pression différentielle appliquée entre l'intérieur de la préforme et l'extérieur.

4. Procédé selon la revendication 1, 2 ou 3, dans lequel l'étape de déplacement est provoquée au moins en partie par un étirement vers le bas appliqué à la partie du tube de la préforme.

5. Procédé selon la revendication 1, comprenant en outre l'étape consistant à étirer longitudinalement la partie du tube de la préforme.

6. Procédé selon la revendication 1 ou 5, comprenant en outre l'étape consistant à appliquer une pression différentielle entre l'intérieur de la préforme et l'extérieur pour faire l'expansion de la partie du tube pour former le corps de la bouteille.

7. Procédé selon la revendication 1, dans lequel la préforme est formée avec une partie étanche s'étendant vers le haut (44), s'étendant au-dessus de la deuxième détente dans la partie du bord.

8. Procédé selon la revendication 1, dans lequel le bord comprend un rebord vers le bas (46) dépendant de l'extrémité externe du rebord radial.

9. Procédé selon la revendication 8, dans lequel l'étape consistant à déplacer la surface inférieure du rebord radial se déplace en contact homogène avec le rebord vers le bas.

10. Procédé selon la revendication 1, dans lequel la première détente s'étend de manière continue autour de l'embouchure de la préforme.

11. Procédé selon la revendication 1, dans lequel la deuxième détente s'étend de manière continue autour de l'embouchure de la préforme.

12. Procédé selon la revendication 1, dans lequel le matériau est sélectionné à partir des groupes comprenant le téréphtalate de polyéthylène, le naphtalate de polyéthylène et des copolymères et des mélanges de celui-ci.

13. Procédé selon la revendication 1, comprenant en outre les étapes consistant à remplir la bouteille avec du liquide, et ajuster par pression une fermeture (100) sur la bouteille, dans laquelle la fermeture comprend une première et une deuxième partie d'enclenchement (114, 116) pour s'enclencher respectivement sur la première et la deuxième détentes pour fixer la fermeture sur la bouteille.

14. Procédé selon la revendication 13, dans lequel la première et/ou la deuxième parties d'enclenchement sont discontinues autour de la fermeture.

15. Appareil pour faire une bouteille comprenant un corps et une partie de bord définissant une ouverture pour la bouteille, l'ouverture étant capable d'être fermée par une fermeture par pression, l'appareil comprenant :
un appareil de moulage par injection (12, 14, 16, 18, 22) formé et disposé pour produire une préforme en forme d'un tube à extrémité fermée avec un bord à son embouchure, le bord comprenant un rebord généralement radial vers l'extérieur comportant une surface supérieure et une surface inférieure, une première détente dressée à partir de la surface supérieure du rebord en direction de l'extrémité radialement interne de celle-ci, et une deuxième détente radialement externe à la bordure externe du rebord avec le tube dépendant de la bordure radialement interne du rebord ; et un appareil de moulage par pression (50) comportant des parties de moule définissant une cavité de moule et comprenant un moyen (56) pour situer la préforme dans la cavité du moule avec la deuxième détente dans un emplacement fixé sur celui-ci, et un moyen (64) pour appliquer un différentiel de pression entre l'intérieur du tube et l'extension pour faire l'expansion du tube en contact avec les parties de moule définissant la cavité du moule,
**caractérisé en ce que**
l'appareil comprend un moyen (60) pour déplacer le rebord et la première détente vers le bas et vers le haut par rapport à la deuxième détente de telle sorte que la surface supérieure du rebord soit tournée vers l'intérieur et que la première détente fasse saillie vers l'intérieur dans l'ouverture de la bouteille.

16. Bouteille (72) pouvant être obtenue par le procédé de la revendication 1, constituée d'un matériau qui est susceptible d'être déformé quand il est chauffé, la bouteille comprenant une partie de corps et une partie de bord (30), la partie de bord étant plus étroite que la partie du corps et fournissant une ouverture constituant l'embouchure de la bouteille, la partie du bord comprenant une détente tournée vers l'intérieur (40) tournée vers l'ouverture et une détente tournée vers l'extérieur (42) tournée radialement vers l'extérieur, une partie entre les détentes étant adaptée pour constituer une partie étanche (44).

17. Bouteille selon la revendication 16, dans laquelle la bouteille est fournie avec une fermeture étanche (100), la fermeture comportant un creux périphérique défini entre le rebord cylindrique interne (108) et un bras externe (112), le rebord cylindrique interne (108) transportant un moyen d'enclenchement (114) pour enclencher la détente tournée vers l'intérieur sur la bouteille, et le bras (112) transportant un moyen d'enclenchement (116) pour enclencher la détente tournée vers l'extérieur sur la bouteille, et une partie (110) dans le creux pour un enclenchement étanche avec la partie étanche (44) de la partie du bord (30) de la bouteille.
